# EUROPÄISCHE PATENTSCHRIFT

(11) **EP 2 633 988 B1**
(45) Veröffentlichungstag und Bekanntmachung des Hinweises auf die Patenterteilung: **03.09.2014**
(21) Anmeldenummer: 13155713.4
(22) Anmeldetag: 19.02.2013
(51) Int. Cl.: B29D 30/46, B26D 3/00

(54) **Verfahren zum Ablängen eines Reifenbauteiles aus einem Elastomer mit einer an den Seiten dünnen und spitz zulaufenden Materialdicke**
Method for trimming a tire part from an elastomer with a material thickness that is thin at the sides and comes to a sharp point
Procédé de sectionnement d'un composant de pneu constitué d'un élastomère ayant une épaisseur de matériau fine sur les côtés et s'étendant en pointe

(30) Priorität: 02.03.2012 DE 102012101766
(43) Veröffentlichungstag der Anmeldung: 04.09.2013
(73) Patentinhaber: Continental Reifen Deutschland GmbH, 30165 Hannover (DE)
(72) Erfinder: Hanke, Andreas, 30449 Hannover (DE)
(74) Vertreter: Widjaja, Wira

(56) Entgegenhaltungen:
- EP-A1- 0 548 607
- EP-A1- 1 642 694
- JP-A- H0 248 198

## Beschreibung

Die Erfindung betrifft ein Verfahren zum Ablängen eines Reifenbauteiles aus einem Elastomer mit einer an den Seiten dünnen und spitz zulaufenden Materialdicke.

Reifenbauteile in Form von Gummistreifen werden vor einem Schneidvorgang entlang einer Schneidleiste fixiert. Die Schneidleiste ist im Allgemeinen zusätzlich mit sogenannten Vakuumnestern versehen, mit denen die Gummistreifen angesaugt und damit fixiert werden. Abhängig von der Materialbreite des Reifenbauteils liegen ein Teil der Vakuumnester frei, wodurch durch eine Leckage die Wirkung des Vakuums erheblich reduziert wird. Die reduzierte Ansaugwirkung kann dazu führen, dass der Gummistreifen nicht mehr ausreichend fixiert wird und dadurch die Schneidqualität nicht mehr ausreichend ist. Die verminderte Schneidqualität kann z. B. zu einer welligen Schnittkante führen.

Die EP 1 642 694 A1, EP 0 548 607 A1 und JP H02 48198 A offenbaren herkömmliche Schneidvorrichtungen.

Der Erfindung lag die Aufgabe zugrunde, ein Verfahren bereitzustellen, mit dem das Reifenbauteil mit einer hohen Schnittqualität geschnitten wird.

Gelöst wird die Aufgabe durch ein Verfahren mit folgenden Schritten:
a) Förderung des abzulängenden Reifenbauteiles zu einer Schneidvorrichtung,
b) Positionieren des abzulängenden Reifenbauteiles in der Schneidvorrichtung unter einer Schneidleiste mit einer Schneidnut,
c) Fixierung des Reifenbauteiles gegen die Schneidleiste mit einer im Wesentlichen gleichmäßigen Druckkraft,
   wobei das Reifenbauteil unabhängig von seiner Breite mit einem Fixiermittel gegen die Schneidleiste angedrückt wird und
   dabei gleichzeitig mit dem Fixiermittel die an den Seiten des Reifenbauteiles offenliegenden Vakuumnester an der Schneidleiste zum Ansaugen des Reifenbauteiles luftdicht verschlossen werden,
   wodurch das Reifenbauteil mit den abgedeckten Vakuumnester mit einer hohen Saugkraft und im Wesentlichen ohne Druckverluste gegen die Schneidleiste fixiert wird,
d) Durchführen des Schneidvorganges mit einem Schneidmesser,
   wobei das Schneidmesser mit einer im Wesentlichen gleichbleibenden Geschwindigkeit entlang der Schneidleiste geführt wird und dabei das Reifenbauteil entlang einer geraden Schneidebene durchtrennt,
e) Öffnen der Fixierung des Reifenbauteiles an der Schneidleiste und Zurückverfahren der Fixiermittel in ihre Ausgangspositionen,
f) Weitertransport des abgelängten Reifenbauteiles zu einer Reifenaufbautrommel.

Ein Vorteil der Erfindung ist insbesondere darin zu sehen, dass durch das erfindungsgemäße Verfahren die Schnittqualität am abzulängenden Reifenbauteil erheblich verbesssert wird. Das Reifenbauteil wird sicher und mit einer hohen Anpresskraft an der Schneidleiste fixiert, so dass das Schneidmesser einen geraden Schnitt durch das Reifenbauteil vollziehen kann. Das Reifenbauteil wird unabhängig von seiner Breite sicher mit dem Fixiermittel gegen die Schneidleiste angedrückt, wobei gleichzeitig mit dem Fixiermittel die an den Seiten des Reifenbauteils offen liegenden Vakuumnester an der Schneidleiste luftdicht verschlossen werden. Auf diese Weise werden insbesondere die dünnen und spitz zulaufenden Ränder des Reifenaufbauteiles fest an der Schneidleiste fixiert, so dass diese sich beim Schneidvorgang nicht mehr frei bewegen können.

In einer vorteilhaften Weiterbildung der Erfindung ist vorgesehen, dass bei Schritt c) das Fixiermittel eine Vielzahl von einzelnen Stiften umfasst,
wobei ein Teil der einzelnen Stifte beim Fixieren des Reifenbauteiles in einen Teil der Vakuumnester gedrückt wird und diese luftdicht verschließt. Durch die Stifte wird ein luftdichtes Verschließen der Vakuumnester gewährleistet. Außerdem lassen sich mit den Stiften die Ränder des Reifenbauteiles sicher fixieren.

In einer weiteren vorteilhaften Weiterbildung der Erfindung ist vorgesehen, dass bei Schritt c) die einzelnen Stifte parallel zur Schneidebene verfahren werden und dabei die Vakuumnester luftdicht verschlossen werden,
wobei die einzelnen Stifte in einer verfahrbaren Leiste angeordnet sind. Dadurch werden die Stifte mit einem ausreichenden Anpressdruck gegen die Öffnungen in den Vakuumnestern gedrückt.

In einer weiteren vorteilhaften Weiterbildung der Erfindung ist vorgesehen, dass die einzelnen Stifte mit jeweils einer Feder in der Leiste gelagert sind,
wobei die Federn mit einer vorgegebenen Druckkraft gegen die Rückseite der Stifte drücken. Die Federn stellen sicher, dass die Stifte unterschiedlich tief in die Leiste für die Stifte eingedrückt werden können. Außerdem lässt sich mit den Federn eine vordefinierte Druckkraft einstellen.

In einer weiteren vorteilhaften Weiterbildung der Erfindung ist vorgesehen, dass gegenüberliegend zu den Stiften Magnete in der Schneidleiste angeordnet sind,
wobei die Magnete bei Schritt c) die Fixierwirkung und Abdichtwirkung der Stifte in den Vakuumnestern verstärken. Dadurch wird auf einfache Weise die Dichtwirkung in den Öffnungen der Vakuumnester verstärkt.

In einer weiteren vorteilhaften Weiterbildung der Erfindung ist vorgesehen, dass die Enden der Stifte Gummistopfen zur Verstärkung der Dichtwirkung aufweisen. Die Gummistopfen verschließen die Öffnungen in den Vakuumnestern mit einer hohen Luftdichtigkeit.

In einer weiteren vorteilhaften Weiterbildung der Erfindung ist vorgesehen, dass die Enden der Stifte eine spitze Form zur Verstärkung der Dichtwirkung aufweisen. Durch die spitze Form wird eine Keilwirkung in den Öffnungen der Vakuumnester erzeugt.

In einer weiteren vorteilhaften Weiterbildung der Erfindung ist vorgesehen, dass die Stifte bei Schritt c) mit einem pneumatischen Mittel ausgefahren werden. Dadurch lassen sich die Stifte mit einer hohen Geschwindigkeit ausfahren.

In einer weiteren vorteilhaften Weiterbildung der Erfindung ist vorgesehen, dass das Reifenbauteil bei Schritt c) auf der gegenüberliegenden Seite mit einem zweiten Fixiermittel in Form von einzelnen Klemmsegmenten gegen die Schneidleiste fixiert wird. Mit den Klemmsegmenten erfolgt eine sichere Fixierung des gegenüberliegenden Reifenbauteils.

In einer weiteren vorteilhaften Weiterbildung der Erfindung ist vorgesehen, dass bei Schritt c) das Fixiermittel ein Paket mit Streifen aus Federbandstahl umfasst. Dadurch erfolgt eine flächenförmige Fixierung des Reifenbauteils an der Schneidleiste.

In einer weiteren vorteilhaften Weiterbildung der Erfindung ist vorgesehen, dass die oberste Streifenlage des Paketes eine Beschichtung zur Abdichtung der Vakuumnester in der Schneidleiste aufweist. Die Beschichtung besteht aus einem flexiblen Material, welches in die Öffnungen der Vakuumnester gedrückt wird und dabei diese luftdicht verschließt.

In einer weiteren vorteilhaften Weiterbildung der Erfindung ist vorgesehen, dass in der Schneidleiste zwischen den Vakuumnestern Magnete zur Verstärkung der Dichtwirkung und Fixierwirkung angeordnet sind. Durch die Magnete werden die Streifen aus Federbandstahl fest gegen die Schneidleiste gedrückt.

Anhand eines Ausführungsbeispiels soll die Erfindung näher erläutert werden. Es zeigt:
- Fig. 1:: ein Ausführungsbeispiel des erfindungsgemäßen Verfahrens,
- Fig. 2:: das Ausführungsbeispiel in einer 3-D-Ansicht.

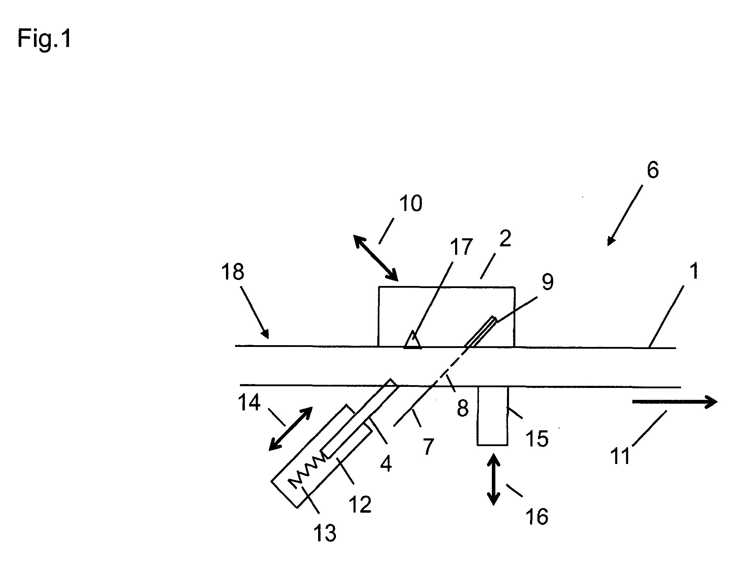

Die Fig. 1 zeigt ein Ausführungsbeispiel des Verfahrens. Das Reifenbauteil 1 wird bei einem ersten Verfahrensschritt in Materialfluss Richtung 11 in die Schneidvorrichtung 6 gefördert. Bei dem Reifenbauteil 1 kann es sich um einen unvulkanisierten Laufstreifen für einen Fahrzeugreifen handeln, der nach dem Schneidvorgang einer Reifenbautrommel zugeführt wird. In Fig. 1 sind lediglich die für das Verfahren wesentlichen Bauteile der Schneidvorrichtung dargestellt. Nachdem das Reifenbauteil in der Schneidvorrichtung 6 positioniert wurde, verfährt die Schneidleiste 2 von oben gegen das Reifenbauteil 1. Die Schneidleiste 2 wird in Bewegungsrichtung 10 gegen das Reifenbauteil 1 verfahren. Es ist ebenfalls denkbar, dass die Schneidleiste 2 der Bewegungsrichtung 14 folgt, parallel zur Schneidebene 8.

In der Schneidleiste ist eine Schneidnut 9 für Schneidmesser 7 angeordnet. In einem weiteren Verfahrensschritt erfolgt die Fixierung des Reifenbauteils 1 gegen die Schneidleiste 2 mit dem Fixiermittel 4 und den Klemmsegmenten 15. Das Fixiermittel 4 ist bei diesem Ausführungsbeispiel in Form von einzelnen Stiften ausgebildet, die von unten gegen das Reifenbauteil 1 drücken. Die Fixierwirkung wird insbesondere durch die Vakuumnester 17 in der Schneidleiste 2 verstärkt. Durch die Vakuumnester wird eine Saugwirkung erzielt, die das Reifenbauteil 1 gegen die Schneidleiste 2 ansaugt. Außerdem können in der Schneidleiste 2 Magnete angeordnet sein, die magnetisch auf die Stifte 4 wirken und dadurch die Fixierwirkung der Stifte 4 erhöhen. Die Stifte 4 sind einzeln in der Leiste 12 für das Fixiermittel gelagert. Auf der Hinterseite des Stiftes 4 drückt eine Feder 13 gegen die Rückseite des Stiftes 4. Zur Fixierung des Reifenbauteils 1 gegen die Schneidleiste 2 wird die gesamte Leiste 12 in Bewegungsrichtung 14 in Richtung des Reifenbauteils 1 verfahren. Dadurch drücken die einzelnen Stifte 4 von unten gegen das Reifenbauteil 1. Die Federn 13 in der Leiste 12 werden entsprechend eingedrückt. Auf der gegenüberliegenden Seite sind eine Vielzahl von Klemmsegmenten 15 angeordnet, die auf der anderen Schneidseite das Reifenbauteil 1 gegen die Schneidleiste 2 fixieren. Die Klemmsegmente 15 werden dabei in Bewegungsrichtung 16 von unten gegen das Reifenbauteil 1 gedrückt.

Es ist ebenfalls möglich die Klemmsegmente 15 durch eine analoge Klemmung mit den Stiften 4 und der beweglichen Leiste 12 und der Feder 13 zu ersetzen, so dass auf beiden Seiten die gleiche Art einer Klemmung vorgesehen ist.

Nachdem das Reifenbauteil 1 auf beiden Schneidseiten fest gegen die Schneidleiste 2 fixiert wurde, erfolgt der eigentliche Schneidvorgang. Dabei wird das Schneidmesser 7 senkrecht zur Blattebene mit einer hohen Geschwindigkeit durch das Reifenbauteil verfahren. Das Schneidmesser 7 trennt dabei das Reifenbauteil 1 in der Schneidebene 8 durch. Das obere Teil des Schneidmessers 7 wird bei dem Schneidvorgang in der Schneidnut 9 verfahren. Nachdem das Reifenbauteil in der Schneidebene 8 durchgetrennt worden ist, werden die Schneidleiste 2, die Leiste 12 und die Klemmsegmente 15 wieder in ihre Ausgangsposition zurück verfahren, um die Fixierung des Reifenbauteils zu lösen. Das abgelängte Reifenbauteil 1 wird dann in Materialflussrichtung 11 zu einer Reifenaufbautrommel geführt. Anschließend wird das hintere Reifenbauteil 18 in die Schneidvorrichtung 6 gefördert und an der entsprechenden Position unter der Schneidleiste 2 angeordnet, um den nächsten Schneidvorgang vorzubereiten.

Die Materialflussrichtung 11 kann auch entgegen gesetzt sein.

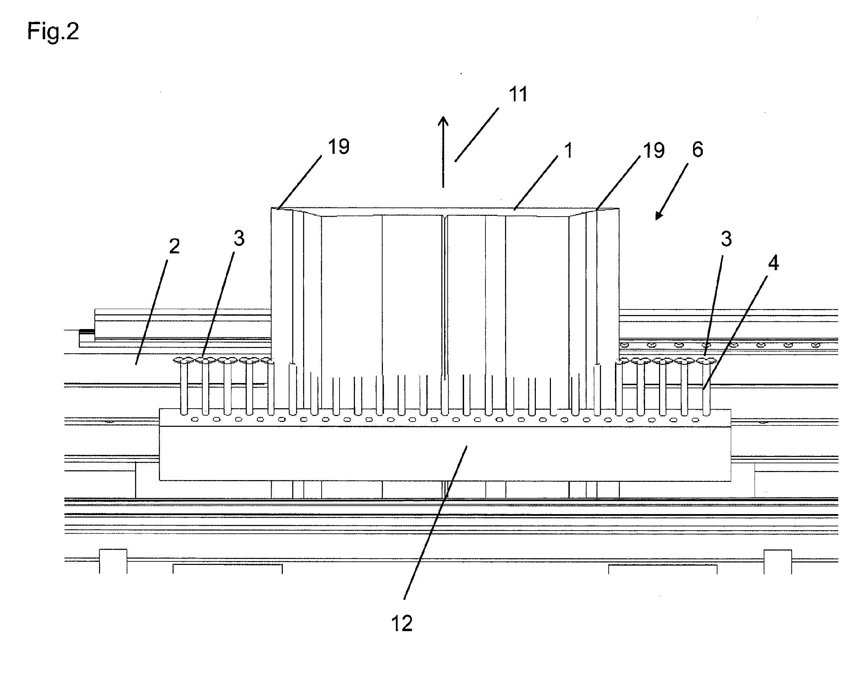

Fig. 2 zeigt das Verfahren bzw. die Schneidvorrichtung 6 in einer 3-D-Ansicht, wobei die Materialflussrichtung 11 in der Fig. 1 senkrecht zur Blattebene gerichtet ist. Das Reifenbauteil 1 in Form eines Laufstreifens weist an den Seiten bzw. Rändern 19 eine sehr dünne und spitz zu laufende Materialdicke auf. In der Figur ist der Verfahrensschritt dargestellt, bei dem die Stifte 4 von unten gegen das Reifenbauteil 1 gedrückt werden und das Reifenbauteil 1 fest an der Schneidleiste 2 fixieren. Bei diesem Vorgang werden die Stifte 4 unterhalb des mittleren Bereiches des Laufstreifens 1 stärker eingedrückt als die Stifte 4, die sich unterhalb der Ränder 19 des Reifenbauteils 1 befinden. Abhängig von der Kontur des Reifenbauteils 1 werden die Stifte 4 unterschiedlich tief in der Leiste 12 eingedrückt. Auf beiden Seiten des Reifenbauteils 1 sind eine Vielzahl von Vakuumnestern 3 freigelegt, die nicht durch die Oberseite des Reifenbauteils 1 abgedeckt werden. Die Anzahl der Vakuumnester 3 ist so bemessen, dass mit ihnen ebenfalls ein sehr breites Reifenbauteil 1 fixiert werden kann. Beim Fixieren des Reifenbauteils 1 mit den Stiften 4 gegen das Reifenbauteil 1 werden die seitlich angeordneten Stifte 4 in die Öffnungen der Vakuumnester 3 gedrückt, wo sie diese Vakuumnester 3 luftdicht verschließen. Die Stifte 4 werden so in die Vakuumnester 3 gedrückt, dass an diesen Vakuumnestern keine Leckageverluste entstehen können. In der Mitte der Vakuumnester 3 ist eine Öffnung angeordnet, mit der ein entsprechendes Ansaugvakuum erzeugt wird. Die Vakuumnester 3 umfassen wie dargestellt zwei nebeneinander liegende kegelförmige Öffnungen, wobei in der Mitte zwischen diesen kegelförmigen Öffnungen die Öffnung zum Erzeugen des Vakuums angeordnet ist. Das spitzförmige Ende 4 verschließt diese Öffnung im Vakuumnest 3 luftdicht. Über die seitlich von dem Reifenbauteil 1 angeordneten Stifte 4 werden alle frei liegenden Vakuumnester 3 luftdicht verschlossen. Dadurch wird das Reifenbauteil 1 auf seiner Oberseite mit einer hohen Ansaugkraft gegen die Schneidleiste 2 gedrückt. Die gegenüberliegende Fixierung auf der anderen Seite der Schneidebene mit Klemmsegmenten ist in dieser Figur nicht dargestellt. In einem weiteren nicht dargestellten Ausführungsbeispiel werden die Vielzahl von Stiften 4 durch ein Paket von übereinander liegenden Streifen aus Federbandstahl ersetzt.

### Bezugszeichenliste

- 1: Reifenbauteil (Laufstreifens)
- 2: Schneidleiste
- 3: Vakuumnester
- 4: Fixiermittel in Form von einzelnen Stiften
- 5:
- 6: Schneidvorrichtung
- 7: Schneidmesser
- 8: Schneidebene
- 9: Schneidnut in Schneidleiste für Messer
- 10: Bewegungsrichtung der Schneidleiste
- 11: Materialflussrichtung
- 12: Leiste für Fixiermittel
- 13: Feder
- 14: Bewegungsrichtung der Leiste für Fixiermittel
- 15: Klemmsegment
- 16: Bewegungsrichtung des Klemmsegmentes
- 17: Position der Vakuumnester in der Schneidleiste
- 18: hinteres Reifenbauteil
- 19: Ränder bzw. dünne Materialdicke des Reifenbauteils

## Patentansprüche

1. Verfahren zum Ablängen eines Reifenbauteiles (1) aus einem Elastomer mit einer an den Seiten dünnen und spitz zulaufenden Materialdicke (19) für die Herstellung eines Reifenrohlings, mit folgenden Schritten:
a) Förderung des abzulängenden Reifenbauteiles (1) zu einer Schneidvorrichtung (6),
b) Positionieren des abzulängenden Reifenbauteiles in der Schneidvorrichtung (6) unter einer Schneidleiste (2) mit einer Schneidnut (9),
c) Fixierung des Reifenbauteiles (1) gegen die Schneidleiste (2) mit einer im Wesentlichen gleichmäßigen Druckkraft,
wobei das Reifenbauteil (1) unabhängig von seiner Breite mit einem Fixiermittel (4) gegen die Schneidleiste (2) angedrückt wird und
dabei gleichzeitig mit dem Fixiermittel (4) die an den Seiten des Reifenbauteiles offenliegenden Vakuumnester (3) an der Schneidleiste (2) zum Ansaugen des Reifenbauteiles (1) luftdicht verschlossen werden,
wodurch das Reifenbauteil (1) mit den abgedeckten Vakuumnestern (3) mit einer hohen Saugkraft und im Wesentlichen ohne Druckverluste gegen die Schneidleiste (2) fixiert wird,
d) Durchführen des Schneidvorganges mit einem Schneidmesser (7),
wobei das Schneidmesser (7) mit einer im Wesentlichen gleichbleibenden Geschwindigkeit entlang der Schneidleiste (2) geführt wird und dabei das Reifenbauteil (1) entlang einer geraden Schneidebene (8) durchtrennt,
e) Öffnen der Fixierung des Reifenbauteiles (1) an der Schneidleiste (2) und Zurückverfahren der Fixiermittel (4) in ihre Ausgangspositionen,
f) Weitertransport des abgelängten Reifenbauteiles (1) zu einer Reifenaufbautrommel.

2. Verfahren nach Anspruch 1,
**dadurch gekennzeichnet, dass**
bei Schritt c) das Fixiermittel eine Vielzahl von einzelnen Stiften (4) umfasst, wobei ein Teil der einzelnen Stifte (4) beim Fixieren des Reifenbauteiles (1) in einen Teil der Vakuumnester (3) gedrückt wird und diese luftdicht verschließt.

3. Verfahren nach einem der vorhergehenden Ansprüche,
**dadurch gekennzeichnet, dass**
bei Schritt c) die einzelnen Stifte (4) parallel zur Schneidebene (8) verfahren werden und dabei die Vakuumnester (3) luftdicht verschlossen werden,
wobei die einzelnen Stifte (4) einer verfahrbaren Leiste (12) angeordnet sind.

4. Verfahren nach einem der vorhergehenden Ansprüche,
**dadurch gekennzeichnet, dass**
die einzelnen Stifte (4) mit jeweils einer Feder (13) in der Leiste (12) gelagert sind, wobei die Federn (13) mit einer vorgegebenen Druckkraft gegen die Rückseite der Stifte (4) drücken.

5. Verfahren nach einem der vorhergehenden Ansprüche,
**dadurch gekennzeichnet, dass**
gegenüberliegend zu den Stiften (4) Magnete in der Schneidleiste (2) angeordnet sind, wobei die Magnete bei Schritt c) die Fixierwirkung und Abdichtwirkung der Stifte (4) in den Vakuumnestern (3) verstärken.

6. Verfahren nach einem der vorhergehenden Ansprüche,
**dadurch gekennzeichnet, dass**
die Enden der Stifte (4) Gummistopfen zur Verstärkung der Dichtwirkung aufweisen.

7. Verfahren nach einem der vorhergehenden Ansprüche,
**dadurch gekennzeichnet, dass**
die Enden der Stifte (4) eine spitze Form zur Verstärkung der Dichtwirkung aufweisen.

8. Verfahren nach einem der vorhergehenden Ansprüche,
**dadurch gekennzeichnet, dass**
die Stifte (4) bei Schritt c) mit einem pneumatischen Mittel ausgefahren werden.

9. Verfahren nach einem der vorhergehenden Ansprüche,
**dadurch gekennzeichnet, dass**
das Reifenbauteil (1) bei Schritt c) auf der gegenüberliegenden Seite mit einem zweiten Fixiermittel in Form von einzelnen Klemmsegmenten (15) gegen die Schneidleiste (2) fixiert wird.

10. Verfahren nach einem der vorhergehenden Ansprüche,
**dadurch gekennzeichnet, dass**
bei Schritt c) das Fixiermittel (4) ein Paket mit Streifen aus Federbandstahl umfasst.

11. Verfahren nach Anspruch 10,
**dadurch gekennzeichnet, dass**
die oberste Streifenlage des Paketes eine Beschichtung zur Abdichtung der Vakuumnester (3) in der Schneidleiste (2) aufweist.

12. Verfahren nach einem der vorhergehenden Ansprüche,
**dadurch gekennzeichnet, dass**
in der Schneidleiste (2) zwischen den Vakuumnestern (3) Magnete zur Verstärkung der Dichtwirkung und Fixierwirkung angeordnet sind.

## Claims

1. Method for cutting to length a tyre component (1) made of an elastomer with a material thickness (19) that is thin at the sides and comes to a sharp point for the production of a tyre blank, comprising the following steps:
a) conveying the tyre component (1) to be cut to length to a cutting device (6),
b) positioning the tyre component to be cut to length in the cutting device (6) under a cutting bar (2) with a cutting groove (9),
c) fixing the tyre component (1) against the cutting bar (2) with a substantially uniform compressive force,
the tyre component (1) being pressed against the cutting bar (2) by fixing means (4) irrespective of its width and
the fixing means (4) being used at the same time for closing in an airtight manner the vacuum cavities (3) on the cutting bar (2) for sucking the tyre component (1) against it that are exposed at the sides of the tyre component,
whereby the covered vacuum cavities (3) are used for fixing the tyre component (1) against the cutting bar (2) with a high suction force and substantially without pressure losses,
d) carrying out the cutting operation with a cutting blade (7),
the cutting blade (7) being guided along the cutting bar (2) at a substantially constant rate and the tyre component (1) thereby being severed along a straight cutting plane (8),
e) opening the fixing of the tyre component (1) against the cutting bar (2) and returning the fixing means (4) to their starting positions,
f) transporting of the cut-to-length tyre component (1) further to a tyre building drum.

2. Method according to Claim 1,
**characterized in that**,
in step c), the fixing means comprises a multiplicity of individual pins (4),
some of the individual pins (4) being pressed into some of the vacuum cavities (3) and closing them in an airtight manner during the fixing of the tyre component (1).

3. Method according to either of the preceding claims,
**characterized in that**,
in step c), the individual pins (4) are moved parallel to the cutting plane (8) and the vacuum cavities (3) are thereby closed in an airtight manner,
the individual pins (4) being arranged in a movable bar (12).

4. Method according to one of the preceding claims,
**characterized in that**
the individual pins (4) are mounted in the bar (12) with a spring (13) in each case,
the springs (13) pressing against the rear side of the pins (4) with a predetermined compressive force.

5. Method according to one of the preceding claims, **characterized in that**
magnets are arranged in the cutting bar (2) opposite the pins (4),
the magnets intensifying the fixing effect and sealing-off effect of the pins (4) in the vacuum cavities (3) in step c).

6. Method according to one of the preceding claims,
**characterized in that**
the ends of the pins (4) have rubber plugs for intensifying the sealing effect.

7. Method according to one of the preceding claims,
**characterized in that**
the ends of the pins (4) have a pointed form for intensifying the sealing effect.

8. Method according to one of the preceding claims,
**characterized in that**
the pins (4) are extended by a pneumatic means in step c).

9. Method according to one of the preceding claims,
**characterized in that**,
in step c), the tyre component (1) is fixed on the opposite side against the cutting bar (2) by a second fixing means in the form of individual clamping segments (15).

10. Method according to one of the preceding claims,
**characterized in that**,
in step c), the fixing means (4) comprises a pack with strips of spring strip steel.

11. Method according to Claim 10,
**characterized in that**
the uppermost strip layer of the pack has a coating for sealing off the vacuum cavities (3) in the cutting bar (2).

12. Method according to one of the preceding claims,
**characterized in that**
magnets for intensifying the sealing effect and fixing effect are arranged in the cutting bar (2) between the vacuum cavities (3).

## Revendications

1. Procédé de coupe à longueur d'un composant (1) de bandage de roue en élastomère, dont l'épaisseur (19) du matériau est mince sur les côtés et augmente en pointe, pour la fabrication d'une ébauche de bandage de roue, le procédé présentant les étapes suivantes :
a) transport du composant (1) de bandage de roue à découper à longueur vers un dispositif de coupe (6),
b) placement du composant de bandage de roue à découper à longueur dans le dispositif de coupe (6), en dessous d'une latte de coupe (2) présentant une rainure de coupe (9),
c) fixation du composant (1) de bandage de roue contre la latte de coupe (2) en appliquant une force de poussée essentiellement uniforme,
le composant (1) de bandage de roue étant repoussé contre la latte de coupe (2) par un élément de fixation (4) indépendamment de sa largeur et
des ventouses (3) ouvertes sur les côtés du composant de bandage de roue et prévues sur la latte de coupe (2) pour aspirer le composant (1) de bandage de roue étant en même temps fermées de manière hermétique par le moyen de fixation (4),
le composant (1) de bandage de roue étant ainsi fixé par les ventouses (3) recouvertes avec une force d'aspiration élevée et essentiellement sans perte de pression contre la latte de coupe (2),
d) exécution de l'opération de coupe à l'aide d'un couteau de coupe (7), le couteau de coupe (7) étant guidé le long de la latte de coupe (2) à une vitesse essentiellement constante et découpant le composant (1) de bandage de roue le long d'un plan rectiligne de coupe (8),
e) ouverture de la fixation du composant (1) de bandage de roue sur la latte de coupe (2) et renvoi des moyens de fixation (4) dans leur position initiale et
f) poursuite du transport du composant (1) de bandage de roue découpé à longueur vers un tambour de montage de bandage de roue.

2. Procédé selon la revendication 1, **caractérisé en ce que** lors de l'étape c), le moyen de fixation comporte plusieurs tiges distinctes (4), une partie des différentes tiges (4) étant enfoncée lors de la fixation du composant (1) de bandage de roue dans une partie des ventouses (3) pour fermer ces dernières de manière hermétique.

3. Procédé selon l'une des revendications précédentes, **caractérisé en ce que** lors de l'étape c), les différentes tiges (4) sont déplacées parallèlement au plan de coupe (8) pour ainsi fermer les ventouses (3) de manière hermétique, les différentes tiges (4) étant disposées sur une latte mobile (12).

4. Procédé selon l'une des revendications précédentes, **caractérisé en ce que** les différentes tiges (4) sont montées chacune au moyen d'un ressort (13) dans la latte (12), les ressorts (13) repoussant le côté arrière des tiges (4) avec une force de poussée prédéterminée.

5. Procédé selon l'une des revendications précédentes, **caractérisé en ce que** des aimants sont disposés face aux tiges (4) dans la latte de coupe (2), les aimants renforçant lors de l'étape c) l'effet de fixation et l'effet d'étanchéité des tiges (4) dans les ventouses (3).

6. Procédé selon l'une des revendications précédentes, **caractérisé en ce que** les extrémités des tiges (4) présentent des bouchons en caoutchouc qui renforcent l'effet d'étanchéité.

7. Procédé selon l'une des revendications précédentes, **caractérisé en ce que** les extrémités des tiges (4) présentent une forme pointue qui renforce l'effet d'étanchéité.

8. Procédé selon l'une des revendications précédentes, **caractérisé en ce que** lors de l'étape c), les tiges (4) sont sorties à l'aide d'un moyen pneumatique.

9. Procédé selon l'une des revendications précédentes, **caractérisé en ce que** lors de l'étape c), le composant (1) de bandage de roue est fixé sur le côté opposé contre la latte de coupe (2) par un deuxième moyen de fixation qui présente la forme de différents segments de serrage (15).

10. Procédé selon l'une des revendications précédentes, **caractérisé en ce que** lors de l'étape c), le moyen de fixation (4) comporte un paquet de rubans d'acier à feuillard élastique.

11. Procédé selon la revendication 10, **caractérisé en ce que** la position supérieure des rubans du paquet présente un revêtement qui assure l'étanchéité des ventouses (3) dans la latte de coupe (2).

12. Procédé selon l'une des revendications précédentes, **caractérisé en ce que** des aimants de renforcement de l'effet d'étanchéité et de l'effet de fixation sont disposés dans la latte de coupe (2) entre les ventouses (3).
